# EUROPEAN PATENT APPLICATION

(11) **EP 3 903 901 A1**
(43) Date of publication of application: **03.11.2021**
(21) Application number: 21153775.8
(22) Date of filing: 27.01.2021
(51) Int. Cl.: B01D 29/31

(54) **FILTER WITH COMPLIANT SECTION**

(30) Priority: 28.04.2020 PL 43368020
(71) Applicant: Hamilton Sundstrand Corporation, Charlotte, NC 28217-4578 (US)
(72) Inventor: CIS, Marcin, 55-330 Lutynia (PL); SZCZESNY, Patryk, 54-130 Wroclaw (PL)
(74) Representative: Dehns

(57) **Abstract**

A filter (100) is described herein having a hollow body extending longitudinally between a first end (112) and a second end (113) and comprising a plurality of holes (111) formed through said body, and a first compliant section (160) formed in said body, said compliant section (160) comprising a plurality of slits (161) which extend through said body and in a circumferential direction around said filter (100). A nozzle/filter assembly is also described as well as a method for making the same.

## Description

The present disclosure relates to filters. In particular, the present disclosure relates to filters which may be used in various fluidic systems such as hydraulic systems amongst others.

### Background

Thin walled filters are widely used elements in hydraulic systems and there are different kinds of filters available. New technologies such as laser cutting allow for filters to be manufactured from a thin walled metallic cylinder wherein the thin walled metallic cylinder is laser cut to create the holes of the filter.

New technology like laser cutting allows for making filters from a thin walled metallic cylinder which has laser cut holes. The size of the holes depends on the required filtration level but is usually in range of fractions of a millimetre, e.g. 0.1 mm or smaller. Due to the fact that the filter has such a thin wall, when holes are densely cut into the thin wall, the wall becomes weakened and in some instances may be prone to mechanical loads, such as axial loads (which may also cause buckling) or bending. In some known arrangements the filter is held in place within the hydraulic system due to it being clamped between two elements which thereby act like a structural support. The intention of this clamping is axially fix the filter in place in order to prevent its movement.

The length of such thin walled filters may have some variation and since the structural, clamping elements and parts are often manufactured so as to create specific tolerances, it is often difficult to fix the filter in place based only on the tolerances between the filter and the clamping elements. This, in turn, may cause the filter to become loose, or may result in an excessive axial force being generated onto the filter.

The new type of filters and clamping systems described herein are therefore improved and do not suffer from these issues.

### Summary

According to a first aspect, a filter is described herein having a hollow body extending longitudinally between a first end and a second end and comprising: a central section between said first and second ends, said central section comprising a plurality of holes formed so as to extend through the wall of said body, and a first compliant section formed in said body at said first and/or second end of said filter, said compliant section comprising a plurality of slits which extend through said body and in a circumferential direction around said filter.

The slits may be described as having a length that extends in said circumferential direction around the filter and a width that extends in the longitudinal direction of said body.

In some examples the width of said slits in said longitudinal direction may be smaller than a width of said holes in said longitudinal direction.

In some examples the compliant section may comprise a plurality of adjacent rows of said slits.

In some examples said plurality of adjacent rows of slits may be provided so as to be in a staggered in position in the circumferential direction relative to each other.

In some examples, the compliant section may have a first row of slits, which is adjacent to a second row of slits, the second row may also be adjacent to a third row of slits and the third row of slits may be adjacent to a fourth row of slits. Each, or some, of the of the slits in the first row may have a length that is the same as, and starts and ends at the same points as, each, or some, of the slits in the third row. Additionally, or alternatively, each, or some, of the slits in the second row may have a length that is the same as, and starts and ends at the same points as each, or some of, the slits in the fourth row.

In some examples the filter may further comprise a second compliant section and said first compliant section may be provided at said first end of said filter and said second compliant section may be provided at said second end of said filter

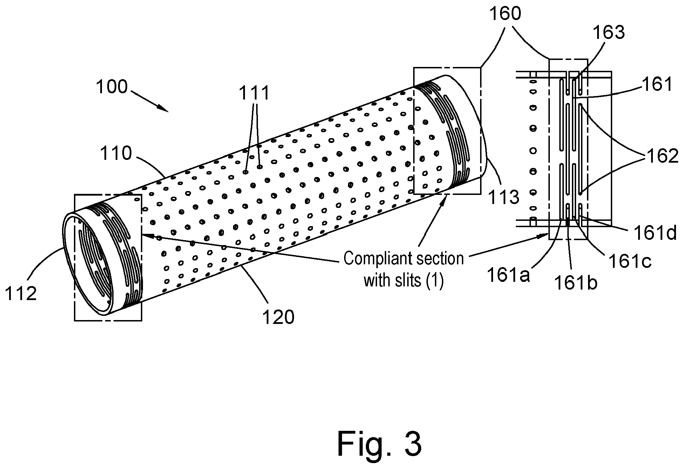

A nozzle/filter assembly is also described herein comprising any of the examples of the new filters described herein with regard to figures 3 to 5. The filter is mounted so as to be positioned and extend within first and second nozzles. The nozzles each have a filtration section with holes formed therein, said holes being aligned with said holes of said filter.

In the nozzle/filter assembly the filter may be positioned so that it is not aligned with the filtration section of the nozzles.

A method of making a filter including any of those described herein with reference to figures 3 to 5 is also described herein. The filter has a hollow body extending longitudinally between a first end and a second end and the method comprises forming a plurality of holes in a central section of the filter that is positioned between said first and second ends, the holes being formed so as to extend through said body, and forming a first compliant section at the first or second end of the filter, by forming a plurality of slits which extend through said body and in a circumferential direction around said filter.

The slits have a length that extends in said circumferential direction around the filter and a width that extends in the longitudinal direction of said body and the method may further comprise forming said holes and said slits such that said width of said slits in said longitudinal direction is smaller than a width of said holes in said longitudinal direction.

In some examples the method may further comprise forming a plurality of adjacent rows of said slits in said compliant section.

In some examples the method may further comprise forming said plurality of adjacent rows of slits so that they are staggered in position in the circumferential direction relative to each other.

In some examples the method may further comprise forming two or four adjacent rows of said slits in said compliant section such that there is a first row, which is adjacent to a second row, the second row also being adjacent to a third row and the third row being adjacent to a fourth row and further comprising forming each of the slits in the first row so that it has a length that is the same as, and starts and ends at the same points as, each of the slits in the third row and/or forming each of the slits in the second row so that it has a length that is the same as, and starts and ends at the same points as the slits in the fourth row.

In some examples, the method may further comprise providing a second compliant section and providing said first compliant section at said first end of said filter and providing said second compliant section at said second end of said filter.

A method of making a nozzle/filter assembly is also described herein comprising mounting any of the filters described herein with reference to figures 3 to 5 so as to be positioned and extend within first and second support structures, such as nozzles. Each of said nozzles have a filtration section with holes formed therein, and the method may comprise positioning said filter relative to said nozzles so that the holes of the nozzles are aligned with said holes of said filter. In some examples the filter and nozzles may be positioned relative to each other so that the compliant section(s) of the filter is/are not aligned with the filtration section of the nozzles.

In any of the examples described herein the slits and/or holes of the filter may be formed by laser cutting. In some examples the slits and holes in the filter are both formed at the same time during the laser cutting process.

### Description of the Figures

Certain embodiments of the present disclosure will now be described in greater detail by way of example only and with reference to the accompanying drawings in which:
Figure 1 shows a known filter with holes cut therein
Figure 2a shows a cross-sectional view of the filter of figure 1 positioned so as to be mounted within two nozzles
Figure 2b shows a perspective view of the filter of figure 1 positioned so as to be mounted within two nozzles
Figure 3 shows a perspective view of a new type of filter having two compliant sections
Figure 4 shown the filter of figure 3 positioned so as to be axially preloaded within a nozzle support structure
Figure 5 shoes the deformation of the compliant section of the filter of figure 4 using finite element (FE) modelling

### Detailed Description

A new method is described herein for manufacturing a filter, and the filter created by this method is also described herein.

An example of a known type of filter 10 for use in a hydraulic system is shown in figures , 2a and 2b. The filter comprises a hollow cylindrical tube. Holes 11 have been cut into the outer cylindrical wall of the filter so as to create channels that extend from the outside surface 12 of the filter 10, through the wall and into the internal cavity 13 of the filter 10. New technologies such as laser cutting may be used to create the holes 11 in the wall of the filter 10. The size of the holes depends on the required filtration level and in some examples the holes may be 0.1mm or smaller. In some examples the filter wall thickness may be in the range of 0.2mm, however, the pressure drop decreases as the thickness decreases. The thickness is limited by manufacturing, handling, etc. If the flow is travelling from outside to inside the filter, too small a thickness may cause collapse of the filter. Since the filter wall itself is also thin, the filter may be weakened due to the presence of the many holes 11. This results in excessive mechanical loads such as axial loads, or bending forces being generated on the filter 10, as described above.

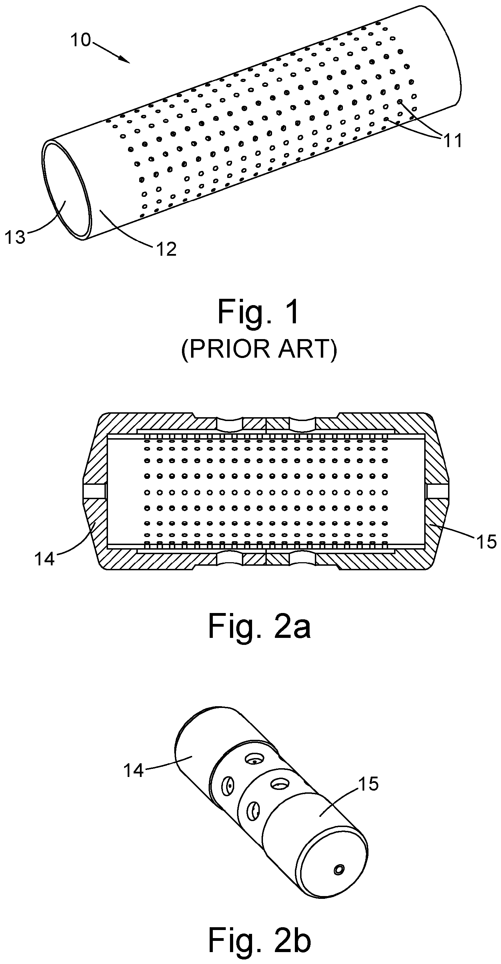

In the examples shown in figures 1, 2a and 2b, the filter is held in place by being mounted within two nozzles 14, 15, each of which is slotted onto either longitudinal end of the filter 10. The filter is clamped between these two nozzles 14, 15 so that they act as a structural support for the filter 10. The presences of these nozzles 14, 15 axially fixes the filter in place and prevent its movement.

As described in the background section, the length of the filter can vary and so unless the filter 10 and nozzles 14, 15 are specifically manufactured so as to perfectly fit each other (which requires very high tolerance), it is difficult to achieve face to face contact between the face of the filter and the nozzles. This results in the filter 10 being be loose or compressed within the nozzles 14, 15 and may also be able to move axially.
A new type of filter 100 will now be described with reference to figures 3 to 5. Figure 3 shows a perspective view of this new filter. The filter 100 is cylindrical (but may have other similar shapes) and extends along a longitudinal axis from a first end 112 to a second end 113. A central section is provided between the first 112 and second ends 113 and has a plurality of holes 111 formed therein. In some examples these holes 111 may be formed by laser cutting. Other techniques may also be used. Each of the holes 111 creates a passageway extending from the outside surface of the filter 100, through the cylindrical wall of the filter 100 and into the hollow cavity within the filter 100. In some examples, the holes 111 may be circular. Other shapes may also be envisaged.

The unique design of this filter 100 is advantageous over known filters in that it allows for the filter to be axially adjustable in length. This is achieved due to the filter 100 comprising at least one compliant section 160. In the example shown in figure 3, there are two compliant sections 160, however, more may also be provided. For example, some filters 100 may only have one compliant section provided, however, in others, a first compliant section may be formed at the first axial end 112 of the filter 100 and a second compliant section 160 may be formed at the other, opposite end 113 of the filter 100 as shown in figure 3. The central section which is positioned between these compliant sections and between the first and second ends acts as a filtration mechanism, allowing fluids to flow through the holes 111 formed in the central filtration section.

The compliant section 160 comprises a section of the filter 100 wherein slits 161 are formed which extend circumferentially around the filter 100 as shown in figure 3. These slits 161 may be formed by different techniques, however, in some examples they may be formed by laser cutting at the same time that the holes 110 are formed. The slits 161 have a length 162 that extends circumferentially around the filter 100 and a width 163 that extends perpendicularly to the length, i.e. axially.

The slits 161 may be formed so that there are a plurality of axially adjacent rows of slits 161 formed, so that they are staggered in position in the circumferential direction. That is, the rows are positioned so as to be positionally offset relative to each other in the circumferential direction and are not aligned in the axial direction. For example, in the example shown in figure 3, the compliance section 160 at the second end of the filter 100 has a first row 161a, which is adjacent to a second row 161b, the second row also being adjacent to a third row, 161c and the third row being adjacent to the fourth row 161d. Each of the slits 161 in the first row 161 has a length that is the same as, and starts and ends at the same points as, each of the slits in the third row 161c. Similarly, each of the slits 161 in the second row has a length that is the same as, and starts and ends at the same points as the slits in the fourth row 161d. Since the material between two slits in the row are therefore located in the middle of the slits of the adjacent row, thereby allowing compliance but still retaining the stiff axial bridge.

The number of slits 161 and rows of slits may vary based on the required compliance and stress levels of the filter 100. In some examples the axial width 163 of the slits 161 may be smaller than the axial width 111 of the holes (e.g. in the case where the holes are circular, the width of the slits 161 is smaller than the diameter of the circular holes 110).

These circumferentially extending slits 161 provide a compliance to the filter, which allows the length of the filter to extend or contract axially, i.e. longitudinally.

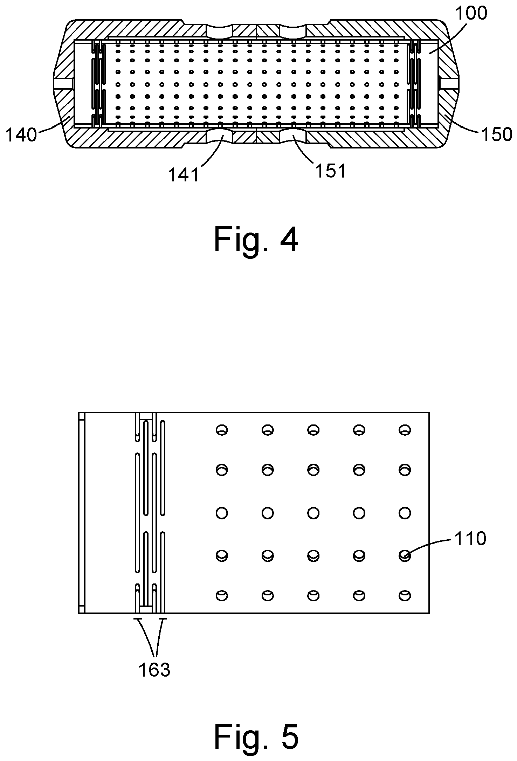

Figure 4 shows an example wherein the new type of filter 100 shown in figure 3 is positioned so as to be mounted within first 140 and second 150 nozzles. A first nozzle 140 is provided so as to surround the outer surface of the filter 100 at its first end 120 and the second nozzle 150 is provided so as to surround the surface of the filter 100 at its second end 113. The nozzles meet each other in the middle so that the entire outer surface of the filter 100 is surrounded by these nozzles as shown in figure 4. The nozzles 140, 150 each have a section of their walls that acts as a filtration surface, wherein holes 141, 151 are formed in their outer cylindrical surface. Since at least some of the holes 110 of the filter 100 are aligned with the holes 141, 151 in the nozzles, fluid can pass through the holes 110 in the filter 100 and out through the holes 141, 151 in the nozzles 140, 150.

When the filter 100 is provided within these nozzles 140, 150, the compliant section(s) of the filter 100 may be positioned so that it is not aligned with the filtration section of the nozzles 140, 150. Instead, only central, filtration section of the filter is provided so as to be aligned with the filtration section of the nozzles. In some examples, the inner surface of the nozzles 140, 150 that are in contact with the compliant section(s) 160 of the nozzle 100 may be sized and shaped so as to grip the filter 100. In some examples this may provide a friction fit, however this is not required. There should be a small or no clearance between the filter and the nozzles in order to prevent the compliant section from acting as a filter area. If the compliant section is smaller than the filter holes then no particles larger than that hole can reach the compliant section.

The filter 100 shown in figure 4 is preloaded so that it is axially fixed within the nozzle 140, 150 due to its larger length and compliant sections 160.

Figure 5 shows the results of a finite element (FE) calculation wherein it can be seen that, due to axial compression of the filter 100, the width 163 of the slits 161 is reduced and the entire displacement of the filter due to axial forces is absorbed by the compliant section 160 of the filter, 100.

Although the above examples have been described in relation to filters for use in hydraulic systems this same technology may be used on filters for use in other technologies.

The new types of filters 100 described herein with reference to figures 3 to 5 have advantages over known filters in that they are able to maintain compliance of the filter, thereby preventing the excessive loading of the filter during assembly in the supported structure. Additionally, since the width of the slits is smaller than the width of the holes (and the width of the slits reduces even further under compression) the compression caused by axial forces does not affect the filtering function even for the sections of the filter that are not covered. A further advantage is that, during manufacture by laser cutting, the slits can be cut at the same time as the holes. Compliance is also obtained for rotation which may reduce bending loads from the supporting structure (i.e. the nozzles).

## Claims

1. A filter (100) having a hollow body extending longitudinally between a first end (112) and a second end (113) and comprising:
a central section, positioned between the first and second end and comprising a plurality of holes (111), and
a first compliant section (160) formed at said first end (112) of said filter, said compliant section (160) comprising a plurality of slits (161) which extend through said body and in a circumferential direction around said filter (100).

2. The filter of claim 1 wherein said slits (161) have a length (162) that extends in said circumferential direction around the filter (100) and a width (163) that extends in the longitudinal direction of said body.

3. The filter of claim 2 wherein said width (163) of said slits (161) in said longitudinal direction is smaller than a width of said holes (110) in said longitudinal direction.

4. The filter of any preceding claim wherein said compliant section (160) comprises a plurality of adjacent rows of said slits (161).

5. The filter of claim 4 wherein said plurality of adjacent rows of slits (161) are provided so as to be in a staggered in position in the circumferential direction relative to each other.

6. The filter of claim 4 or 5 wherein the compliant section (160) has a first row (161a), which is adjacent to a second row (161b), the second row (161b) also being adjacent to a third row (161c) and the third row (161c) being adjacent to a fourth row (161d) and optionally wherein each, or some, of the slits (161) in the first row (161) has a length that is the same as, and starts and ends at the same points as, each, or some, of the slits in the third row (161c) and/or wherein each, or some, of the slits (161) in the second row (161b) has a length that is the same as, and starts and ends at the same points as each, or some of, the slits in the fourth row (161d).

7. The filter of any preceding claim further comprising a second compliant section (160) and wherein said first compliant section (160) is provided at said first end (112) of said filter (100) and said second compliant section (160) is provided at said second end (113) of said filter (100).

8. A nozzle/filter assembly comprising the filter (100) of any preceding claim, wherein said filter (100) is mounted so as to be positioned and extend within first (140) and second 150 nozzles, and wherein said nozzles 140, 150 each have a filtration section with holes 141, 150 formed therein, said holes (141, 151) being aligned with said holes (110) of said filter (100).

9. The nozzle/filter assembly of claim 8 wherein the compliant section(s) of the filter 100 is positioned so that it is not aligned with the filtration section of the nozzles (140, 150).

10. A method of making a filter (100) having a hollow body extending longitudinally between a first end (112) and a second end (113) comprising:
forming a plurality of holes (111) through said body, and
forming a first compliant section (160) in said body by forming a plurality of slits (161) which extend through said body and in a circumferential direction around said filter (100).

11. The method of claim 10 wherein said slits (161) have a length (162) that extends in said circumferential direction around the filter (100) and a width (163) that extends in the longitudinal direction of said body and the method further comprising forming said holes (110) and said slits (161) such that said width (163) of said slits (161) in said longitudinal direction is smaller than a width of said holes (110) in said longitudinal direction.

12. The method of claim 10 or 11 further comprising forming a plurality of adjacent rows of said slits (161) in said compliant section (160).

13. The method of claim 12 further comprising forming said plurality of adjacent rows of slits (161) so that they are staggered in position in the circumferential direction relative to each other.

14. The method of claim 12 or 13 further comprising forming two or four adjacent rows of said slits (161) in said compliant section (160) such that there is a first row (161a), which is adjacent to a second row (161b), the second row (161b) also being adjacent to a third row (161c) and the third row (161c) being adjacent to a fourth row (161d) and further comprising forming each of the slits (161) in the first row (161) so that it has a length that is the same as, and starts and ends at the same points as, each of the slits in the third row (161c) and/or forming each of the slits (161) in the second row (161b) so that it has a length that is the same as, and starts and ends at the same points as the slits in the fourth row (161d).

15. A method of making a nozzle/filter assembly comprising mounting said filter of any of claims 10 to 14 so as to be positioned and extend within first 140 and second 150 nozzles, and wherein said nozzles 140, 150 each have a filtration section with holes 141, 150 formed therein, and the method comprising positioning said holes (141, 151) of said nozzles (140, 150) so that they are aligned with said holes (110) of said filter (100), and optionally positioning the compliant section(s) of the filter 100 so that it is/they are not aligned with the filtration section of the nozzles (140, 150).
